# EUROPÄISCHE PATENTANMELDUNG

(11) **EP 4 144 675 A1**
(43) Veröffentlichungstag der Anmeldung: **08.03.2023**
(21) Anmeldenummer: 21306205.2
(22) Anmeldetag: 03.09.2021
(51) Int. Cl.: B65G 54/02, H02K 41/02, B65G 43/00

(54) **TRANSPORTSYSTEM UND VERFAHREN ZUM ERKENNEN VON MÄNGELN EINES FÜHRUNGSSYSTEMS EINES DERARTIGEN TRANSPORTSYSTEMS**

(71) Anmelder: Schneider Electric Industries SAS, 92500 Rueil-Malmaison (FR)
(72) Erfinder: Stollberger, Martin, 97297 Waldbüttelbrunn (DE); Nickel, Jürgen, 97297 Waldbüttelbrunn (DE)
(74) Vertreter: Manitz Finsterwald Patent- und Rechtsanwaltspartnerschaft mbB

(57) **Zusammenfassung**

Ein Transportsystem, insbesondere ein Multi-Carrier-System, umfasst mehrere Linearmotoren, welche aneinandergereiht angeordnet sind und eine Führungsbahn aufweisen, und zumindest ein Transportelement, das mittels der Linearmotoren entlang der Führungsbahn bewegbar ist. Ferner umfasst das Transportsystem ein Positionserfassungssystem zum Erfassen einer Position des Transportelements entlang der Führungsbahn und einer Abweichung des Transportelements von der Führungsbahn.

## Beschreibung

Die Erfindung betrifft ein Transportsystem sowie ein Verfahren zum Erkennen von Mängeln eines Führungssystems eines derartigen Transportsystems.

Transportsysteme, das heißt insbesondere Multi-Carrier-Systeme, umfassen vorzugsweise eine Vielzahl von Transportelementen, sogenannte Läufer, welche mittels mehreren entlang einer Führungsbahn angeordneten Linearmotoren bewegt werden. Die Transportelemente sind dabei einzeln und unabhängig voneinander bewegbar, sodass Multi-Carrier-Systeme die Möglichkeit schaffen, flexibel an verschiedene industrielle Prozesse angepasst zu werden und insbesondere auch auf Veränderungen in einem industriellen Prozess flexibel reagieren zu können.

Um derartige Systeme möglichst flexibel einsetzen zu können, verzichten einige Verwender auf den Einsatz von Führungssystemen des Transportsystemherstellers und ziehen es vor, ihr eigenes Führungssystem einschließlich der Führungsbahn und beispielsweise Führungsrollen der Transportelemente aufzubauen und zu verwenden.

Allerdings erfüllen eigens aufgebaute Führungssysteme der Verwender häufig nicht die hohen Qualitätsanforderungen. Zum Beispiel können für die Bewegung entlang der Führungsbahn vorgesehene Führungsrollen der Transportelemente verschmutzt und lose sein und dadurch stärker verschleißen. Antriebs- oder Codiermagneten können falsch positioniert sein, oder Schrauben können lose sein. Führungsbahnen können zum Beispiel ungenaue Abstände an der Führung aufweisen, oder Spalte am Übergang zwischen benachbarten Abschnitten der Führung können zu groß sein. Derartige Mängel des Führungssystems führen in der Regel zu einer Beeinträchtigung der Leistungsfähigkeit, der Genauigkeit und der Zuverlässigkeit des Transportsystems.

Es ist eine Aufgabe der vorliegenden Erfindung, die Leistungsfähigkeit, die Genauigkeit und die Zuverlässigkeit eines Transportsystems zu verbessern.

Diese Aufgabe wird durch den Gegenstand der unabhängigen Ansprüche gelöst. Vorteilhafte Weiterbildungen sind Gegenstand der Unteransprüche und ergeben sich aus der Beschreibung und den Zeichnungen.

Das erfindungsgemäße Transportsystem kann beispielsweise ein Multi-Carrier-System sein und umfasst mehrere Linearmotoren, welche aneinandergereiht angeordnet sind und eine Führungsbahn aufweisen, und zumindest ein Transportelement, das mittels der Linearmotoren entlang der Führungsbahn bewegbar ist. Das Transportsystem umfasst ferner ein Positionserfassungssystem zum Erfassen einer Position des Transportelements entlang der Führungsbahn und einer Abweichung des Transportelements von der Führungsbahn.

Mit dem Positionserfassungssystem kann also nicht nur die Position des Transportelements entlang der Führungsbahn erfasst werden, sondern auch dessen Abweichung von der Führungsbahn in den verbleibenden zwei Raumrichtungen. So lässt sich insbesondere erkennen, ob das Führungselement zu nah an der Führungsbahn oder zu weit von dieser weg ist oder ob das Führungselement in der Höhe relativ zu der Führungsbahn versetzt ist, also etwas über oder unter der idealen Höhe zu der Führungsbahn positioniert ist. Die Abweichung betrifft dabei einen Abstand des Transportelements von der Führungsbahn in einer Ebene, die orthogonal zu der Bewegungsrichtung und durch das Transportelement, insbesondere durch den Schwerpunkt des Transportelements, verläuft.

Mit diesen Daten lässt sich ein Rückschluss auf die Qualität des Führungssystems ziehen, insbesondere ob das Führungssystem irgendwelche Mängel aufweist. Dabei umfasst das "Führungssystem" die Elemente, welche zur Führung des Transportelements beitragen, nämlich in der Regel am Transportelement angebrachte Führungsrollen und zumindest zwei an den Linearmotoren vorhandene Führungsschienen, welche die Führungsbahn definieren. Weist das Führungssystem Ungenauigkeiten auf, wirkt sich dies auf die Position und/oder die Orientierung des Transportelements relativ zu der Führungsbahn aus. Somit kann die Leistung und Zuverlässigkeit des Transportsystems erhöht werden, indem Mängel im Führungssystem erkannt und ausgebessert werden können. Zudem wird Verwendern bzw. Kunden von Transportsystemen ermöglicht, ein eigenes Führungssystem zu verwenden, dabei gezielt eventuelle Mängel des Führungssystems abzustellen und somit von einer hohen Flexibilität in der Gestaltung des Transportsystems zu profitieren.

Jeder Linearmotor kann insbesondere sechs Außenflächen aufweisen, nämlich Oberseite, Unterseite, Außenseite, Innenseite und zwei Seitenflächen. Dabei sind die Seitenflächen von benachbarten Linearmotoren durch einen geringen Dehnungsspalt von etwa 0,1 mm bis 0,2 mm zueinander beabstandet oder liegen direkt aneinander an. Sofern ein Dehnungsspalt vorhanden ist, kann dieser entweder nur im Bereich der Führungsbahn oder über die gesamten Seitenflächen vorhanden sein. An der Außenseite kann die Führungsbahn bzw. die Führungsschienen für die Transportelemente ausgebildet sein, wobei Führungsrollen der Transportelemente auf der Außenseite aufliegen. Die Transportelemente können sich durch eine Abwinklung auch in einen Bereich über der Oberseite erstrecken, wobei oberhalb der Oberseite auf den Transportelementen Werkstücke und dergleichen transportiert werden können. Die Innenseite ist im Bereich eines Innenraums des Transportsystems angeordnet.

Das Transportsystem bzw. das Multi-Carrier-System kann insbesondere umlaufend ausgebildet sein, d. h. die Linearmotoren bilden eine geschlossene Führungsbahn, entlang der das Transportelement oder die Transportelemente theoretisch endlos in derselben Richtung bewegt werden können. Das Transportelement oder die Transportelemente werden dabei insbesondere magnetisch angetrieben. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente entlang der Führungsbahn. Mittels der Transportelemente können dadurch beispielsweise Werkstücke entlang der Führungsbahn transportiert werden.

Entlang der Führungsbahn sind mehrere Linearmotoren hintereinander angeordnet. Auf der Führungsbahn können bevorzugt mehrere Transportelemente gleichzeitig angeordnet sein und insbesondere unabhängig und separat voneinander bewegt werden.

Um die Transportelemente auf der Führungsbahn zu halten, werden diese bevorzugt mittels einer Anziehungskraft in einer zu einer Bewegungsrichtung des Transportelements senkrechten Richtung zu der Führungsbahn hingezogen. Somit verläuft die Anziehungskraft auch senkrecht zu der Antriebskraft. Die Anziehungskraft verläuft bevorzugt von der Führungsbahn hin zu den Linearmotoren bzw. zu den Spulen des Linearmotors. Die Anziehungskraft wird üblicherweise dadurch erzeugt, dass der Magnet des Transportelements von einem magnetisch leitfähigen Stator des jeweiligen Linearmotors angezogen wird.

Das Transportelement kann auch als Carrier, Mover oder Läufer, der Linearmotor hingegen auch als Stator bezeichnet werden.

Das Positionserfassungssystem kann als 3D-Erfassungssystem zum Erfassen einer Position des Transportelements relativ zu der Führungsbahn und einer Orientierung des Transportelements relativ zu der Führungsbahn ausgebildet sein. Somit kann mit dem 3D-Erfassungssystem die Orientierung (nachfolgend auch als "Lage" bezeichnet) des Führungselements im Raum erfasst werden, also ob das Führungselement relativ zu der Führungsbahn um eine oder mehrere Achsen geneigt ist.

Außerdem kann das 3D-Erfassungssystem ausgebildet sein, einen Lagewinkel des Transportelements um eine Längsachse des Transportelements, einen Lagewinkel des Transportelements um eine Querachse des Transportelements und/oder einen Lagewinkel des Transportelements um eine Vertikalachse des Transportelements zu detektieren, um die Orientierung des Transportelements relativ zu der Führungsbahn zu erfassen. Die Begriffe "Längsachse", "Querachse" und "Vertikalachse" beziehen sich auf ein mitbewegtes Koordinatensystem des jeweiligen Transportelements, dessen Koordinatenursprung insbesondere im Schwerpunkt des Transportelements liegen kann. Die Längsachse ist dabei stets in Richtung der Bewegungsrichtung gerichtet. Die Querachse erstreckt sich quer zu der Längsachse, also stets in Richtung zu den Linearmotoren oder von diesen weg. Die Vertikalachse ist orthogonal zu Längs- und Querachse, sodass sich ein orthogonales Koordinatensystem ergibt. Somit kann eine Orientierung oder Lage des Transportelements relativ zu der Führungsbahn unter Berücksichtigung aller drei Raumwinkel erfasst werden.

Beispielsweise kann das Transportelement einen Positionsmagneten und das Positionserfassungssystem einen mehrdimensionalen Hall-Sensor, beispielsweise einen 3D-Hall-Sensor, zum Erfassen eines Magnetfelds des Positionsmagneten aufweisen. Der mehrdimensionale Hall-Sensor ist zweckmäßig an einem Linearmotor, insbesondere an der Führungsbahn, vorgesehen und erlaubt das Erfassen der Position des Magnetfelds relativ zu dem mehrdimensionalen Hall-Sensor. Aufgrund der Stärke des erfassten Magnetfelds können Rückschlüsse auf die Abweichung des Magnetfelds, und somit des Transportelements, von der Führungsbahn und dessen Position entlang der Führungsbahn gezogen werden. Der mehrdimensionale Hall-Sensor erlaubt es ferner, eine Neigung des Magnetfelds in den unterschiedlichen Raumwinkeln zu erfassen und dadurch auf eine Orientierung oder Lage des Transportelements zu schließen, da der Positionsmagnet fest an dem Transportelement vorgesehen ist.

Vorzugsweise weist das Positionserfassungssystem mehrere mehrdimensionale Hall-Sensoren auf, die bevorzugt äquidistant entlang der Führungsbahn angeordnet sind, sodass möglichst genaue Aussagen über die Position des Transportelements und die Qualität des Führungssystems über die gesamte Länge der Führungsbahn möglich sind.

Alternativ oder zusätzlich kann das Positionserfassungssystem auch mehrere Einzelsensoren aufweisen, die jeweils eine Position in einer Raumrichtung erfassen. Mehrere solcher Einzelsensoren können dann gemeinsam einen mehrdimensionalen Sensor bilden.

Das Positionserfassungssystem kann alternativ oder zusätzlich auch andere Arten von Sensoren umfassen, um die Position und/oder Lage des Transportelements relativ zur Führungsbahn zu erfassen. So kann das Positionserfassungssystem kapazitive und/oder induktive Sensoren, Lichtschranken, Lichtgitter und/oder Sensoren mit einer Maßverkörperung umfassen. Ein induktiver Sensor kann auch z.B. durch Antriebsspulen der Linearmotoren gebildet werden, um beispielsweise eine Größe eines Luftspalts zwischen dem Permanentmagneten des Transportelements und dem Linearmotor zu erfassen und daraus Rückschlüsse auf die Position und/oder Lage des Transportelements zu ziehen.

In vorteilhafter Ausgestaltung weist das Transportsystem eine Auswerteeinheit auf, die ausgebildet ist, basierend auf der Position und der Orientierung des Transportelements Mängel des Führungssystems zu erkennen. Die Auswerteeinheit kann beispielsweise Teil einer zentralen Steuerung des Transportsystems sein oder einer separaten, mit dem Transportsystem verbindbaren Vorrichtung sein, die es zum Beispiel erlaubt, die erkannten Mängel zu visualisieren oder sogar auszuwerten, um welche Art von Mangel es sich handelt. Ein Nutzer des Transportsystems erhält dann die Information, an welcher Stelle der Führungsbahn eine Ungenauigkeit oder ein Mangel vorliegt und - gegebenenfalls - um welche Art von Mangel es sich handelt. Somit ist ein schnelles Ausbessern von Mängeln möglich, da diese schnell erkannt und lokalisiert werden.

Als weiteren Parameter kann die Auswerteeinheit zum Erkennen von Mängeln des Führungssystems einen Strombedarf der Linearmotoren zum Bewegen des Transportelements auswerten. Abhängig vom Strom, der den Linearmotoren zugeführt wird, ändert sich die auf die Transportelemente wirkende Antriebskraft. Erhöht sich also der Strombedarf, um eine gewünschte Geschwindigkeit der Transportelemente zu erreichen, kann darauf geschlossen werden, dass hierzu eine höhere Antriebskraft nötig ist und das Transportelement folglich eine zu hohe der Antriebskraft entgegenwirkende Widerstandskraft erfährt. Auch hierdurch kann auf Mängel des Führungssystems geschlossen werden, beispielsweise derart, dass das Transportelement zu weit von den Elektromagneten der Linearmotoren beabstandet ist.

Insgesamt können aufgrund der gemessenen Parameter und deren Stelle Rückschlüsse auf vorhandene Mängel und insbesondere auch auf die Art der Mängel des Führungssystems gezogen werden. Somit werden von den an dem Transportelement gemessenen Parametern Rückschlüsse auf das Führungssystem, insbesondere die Führungsschienen, an denen das Transportelement geführt wird, gezogen. Dabei sind grundsätzlich auch Rückschlüsse darauf möglich, worauf der Fehler beruht. So kann z.B. ein Höhenversatz zwischen zwei Teilstücken einer Führungsschiene, ein Verziehen der Führungsschiene und dergleichen erkannt werden. Beispielsweise könnten bei einer vertikalen Abweichung Schrauben nachgezogen werden oder eventuell verschlissene Teile ausgetauscht werden.

Die Auswerteeinheit kann ausgebildet sein, Mängel des Führungssystems basierend auf vorbestimmten Toleranzen zu erkennen. Das heißt, es werden gewisse Toleranzen der Abstände zur Führungsbahn oder der Neigungswinkel festgelegt. Die Auswerteeinheit gleicht die gemessenen Werte gegen die Toleranzen ab und kann so festlegen, welche Abweichungen oder Neigungswinkel noch zulässig sind bzw. keiner Korrektur bedürfen und welchen nachgegangen werden muss. Ein Mangel ist in diesem Fall folglich dann vorhanden, wenn die jeweilige Toleranz überschritten wird.

Die Auswerteeinheit kann ausgebildet sein, bei Erkennen von Mängeln einen Warnindikator auszugeben und/oder eine Ursache für den jeweiligen Mangel zu bestimmen. Ein Warnindikator kann beispielsweise ein digitales, ein optisches und/oder ein akustisches Signal sein.

Das erfindungsgemäße Verfahren dient zum Erkennen von Mängeln eines Führungssystems eines Transportsystems, insbesondere eines Multi-Carrier-Systems. Das Transportsystem kann insbesondere dem zuvor beschriebenen Transportsystem entsprechen. Das Transportsystem weist also mehrere Linearmotoren, welche zum Ausbilden einer Führungsbahn aneinandergereiht angeordnet sind, zumindest ein Transportelement, das mittels der Linearmotoren entlang der Führungsbahn bewegbar ist, und ein Positionserfassungssystem auf. Das Verfahren umfasst die folgenden Schritte:
Bewegen des Transportelements entlang der Führungsbahn,
Erfassen einer Position des Transportelements entlang der Führungsbahn und einer Abweichung des Transportelements von der Führungsbahn an wenigstens einer Stelle entlang der Führungsbahn und
Auswerten der Position und der Abweichung des Transportelements zum Erkennen von Mängeln des Führungssystems.

Das Bewegen des Transportelements kann dabei beispielsweise händisch, also durch Schieben oder Ziehen des Transportelements entlang der Führungsbahn, oder magnetisch durch die Elektromagneten der Linearmotoren geschehen. Insbesondere kann das Bewegen in einer Messfahrt erfolgen, die insbesondere auch langsamer als eine normale Bewegung des Transportelements im regulären Betrieb (z.B. mit maximal 50% oder maximal 20% der Geschwindigkeit des Transportelements im regulären Betrieb) erfolgen kann, um die Präzision der Messungen zu verbessern.

Das gesamte Verfahren kann entweder einmalig, beispielsweise vor Beginn der Betriebsaufnahme des Transportsystems, wiederkehrend, beispielsweise zu bestimmten Wartungsintervallen, oder kontinuierlich wiederholend während des Betriebs des Transportsystems folgen.

Vorzugsweise ist das Positionserfassungssystem als 3D-Erfassungssystem ausgebildet. Dann wird bei dem Erfassen der Position und der Abweichung des Transportelements relativ zu der Führungsbahn zusätzlich eine Orientierung des Transportelements relativ zu der Führungsbahn erfasst.

Vorzugsweise werden die Position und/oder die Orientierung des Transportelements an mehreren Stellen entlang der Führungsbahn erfasst. Diese Stellen sind ferner vorzugsweise äquidistant zueinander angeordnet. Die Stellen entsprechen insbesondere den Positionen der zuvor erwähnten mehrdimensionalen Hall-Sensoren bzw. anderer Sensoren oder Fühler, je nach Ausgestaltung des Führungssystems. Je mehr Stellen entlang der Führungsbahn vorgesehen sind, desto genauere Aussagen über eventuelle Mängel und deren Position sind möglich.

Zum Erkennen von Mängeln des Führungssystems kann ferner ein Strombedarf der Linearmotoren zum Bewegen des Transportelements ausgewertet werden, damit, wie zuvor beschrieben, ein weiterer Rückschluss auf die Qualität des Führungssystems gezogen werden kann.

Das Auswerten der Position und der Orientierung des Transportelements und gegebenenfalls des Strombedarfs kann insbesondere durch Abgleich gegen vorbestimmte Toleranzen erfolgen.

In vorteilhafter Ausgestaltung wird ein Warnindikator bei Erkennen eines Mangels der Führungsbahn ausgegeben und/oder eine Ursache für den jeweiligen Mangel bestimmt. Der Warnindikator kann beispielsweise optisch oder akustisch sein. Ein Bediener kann dann, abhängig von dem festgestellten Mangel, zielgerichtet Maßnahmen zum Abstellen des Mangels ergreifen. Beispielsweise können bei einer festgestellten Abweichung in Querrichtung oder in Vertikalrichtung Schrauben an den Führungsschienen angezogen werden, um die fehlerhafte Position zu korrigieren. Durch das korrekte Positionieren der Führungsschienen kann dann in einem nachfolgenden, weiteren Probelauf überprüft werden, ob die Maßnahmen den Mangel erfolgreich abgestellt haben.

Im Übrigen gelten zu dem erfindungsgemäßen Verfahren die zum erfindungsgemäßen Transportsystem getroffenen Aussagen entsprechend.

Nachfolgend wird die Erfindung schematisch und beispielhaft unter Bezugnahme auf die Zeichnungen beschrieben. Darin zeigt:
- Fig. 1: eine perspektivische Teilansicht eines Multi-Carrier-Systems,
- Fig. 2: eine perspektivische Detailansicht des Multi-Carrier-Systems aus Fig. 1 und
- Fig. 3: ein Beispiel für eine Visualisierung der von einem 3D-Erfassungssystem erfassten Position und Abweichung eines Transportelements von einer Führungsbahn.

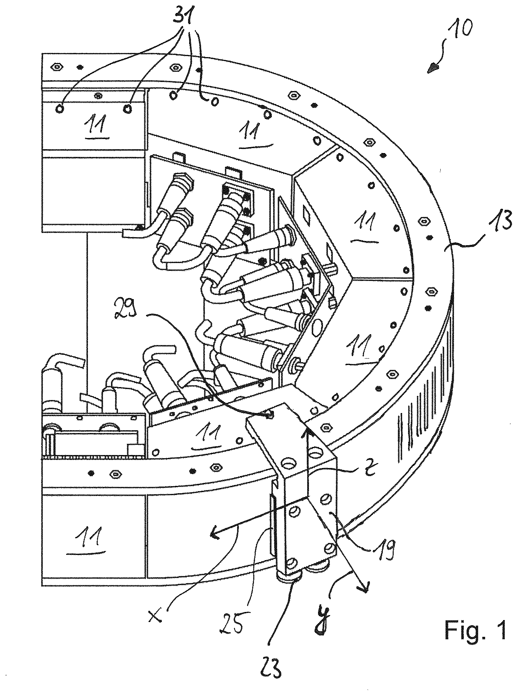

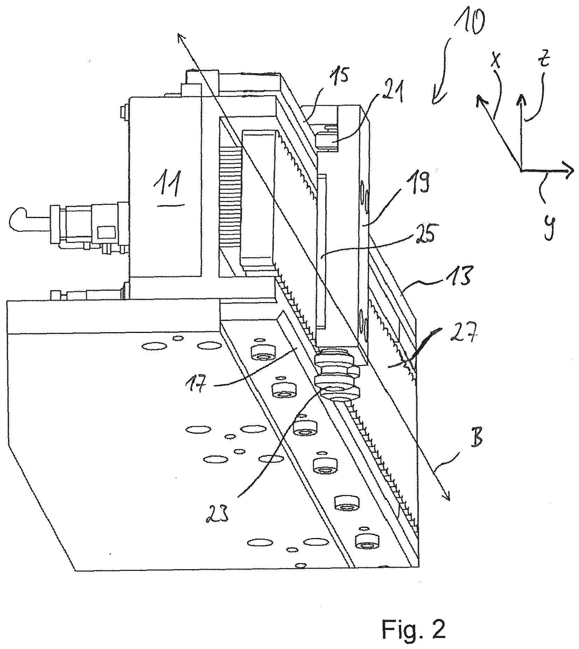

Fig. 1 und 2 zeigen jeweils Teile eines als Multi-Carrier-System ausgebildeten Transportsystems 10 in perspektivischer Ansicht, bei welchem ein Transportelement 19, d. h. ein Carrier, mit ersten und zweiten Führungsrollen 21, 23 entlang vertikal beabstandeten ersten und zweiten Führungsschienen 15, 17 abrollt, die eine sich in einer Bewegungsrichtung B erstreckende Führungsbahn 13 definieren. Fig. 1 und 2 zeigen jeweils nur ein Transportelement 19, wenngleich ebenso eine Vielzahl von Transportelementen 19 unabhängig voneinander entlang der Führungsbahn 13 bewegt werden kann.

Die Führungsschienen 15, 17 sind Teil eines Linearmotors 11, wobei eine Vielzahl von Linearmotoren 11 aneinandergereiht angeordnet sind und so mittels den Führungsschienen 15, 17 die Führungsbahn 13 ausbilden.

Die Linearmotoren 11 umfassen jeweils mehrere Elektromagneten 27, die entlang der Führungsbahn 13 vertikal zwischen den Führungsschienen 15, 17 angeordnet sind. Die Elektromagneten 27 erzeugen ein Magnetfeld, welches auf einen Antriebsmagneten 25 des Transportelements 19 wirkt und das Transportelement 19 entlang der Führungsbahn 13 bewegt. Die Elektromagneten 27 des Linearmotors 11 sind durch einen Luftspalt von dem Antriebsmagneten 25 beabstandet. Der Luftspalt erstreckt sich in vertikaler Richtung, das bedeutet, das Transportelement 19 fährt auf einer Außenseite des Transportsystems 10 und der Linearmotoren 11 entlang.

Der Antriebsmagnet 25 wird von den Linearmotoren 11 durch eine magnetische Anziehungskraft angezogen, welche das Transportelement 19 an seinen Rollen 21, 23 an die Führungsschienen 15, 17 heranzieht.

Ein im Kopfbereich des Transportelements 19 vorgesehener Positionsmagnet 29 dient dazu, mittels Hall-Sensoren (nicht gezeigt) die Position des Transportelements 19 entlang der Führungsbahn 13 zu detektieren. Genauer weist das Transportsystem 10 ein 3D-Erfassungssystem auf, das mehrere im vorliegenden Ausführungsbeispiel äquidistant entlang der Führungsbahn 13 angeordnete und in Fig. 1 angedeutete 3D-Hall-Sensoren 31 umfasst und das dazu dient, eine Position des Transportelements 19 relativ zu der Führungsbahn 13 und eine Orientierung des Transportelements 19 relativ zu der Führungsbahn 13 zu erfassen.

Die 3D-Hall-Sensoren 31 erfassen ein Magnetfeld des Positionsmagneten 29, sodass zum einen dessen Position entlang der Führungsbahn 13 detektiert werden kann. Zudem lässt sich dessen Abweichung von einer (ideal angenommenen) Führungsbahn 13 in einer Ebene, die orthogonal zu der Bewegungsrichtung B und durch das Transportelement 19, insbesondere durch den Schwerpunkt des Transportelements 19, verläuft. Anders ausgedrückt kann die Position eines jeden Transportelements 19 in den drei Raumrichtungen detektiert werden und so die Abweichung von einer idealen Führungsbahn 13 bestimmt werden. Außerdem erfassen die 3D-Hall-Sensoren 31 eine Richtung oder Neigung des Magnetfelds. Somit kann auf die Orientierung des Transportelements 19 geschlossen werden.

Aus den gewonnenen Informationen zur Position des Transportelements 19 in den drei Raumrichtungen und zur Richtung des Magnetfelds des Positionsmagneten 29 können Aussagen darüber getroffen werden, ob das Transportelement 19 beispielsweise quer oder vertikal zu der idealen Führungsbahn 13 versetzt ist oder ob das Transportelement 19 um seine Längsachse x, Querachse y oder Vertikalachse (mitbewegtes Koordinatensystem) geneigt ist. Die gewonnen Informationen erlauben eine Aussage darüber, ob das Transportelement 19 im Wesentlichen entlang der idealen Führungsbahn 13 bewegt wird, oder ob das Transportelement 19 von dieser idealen Führungsbahn 13 abweicht oder geneigt ist. Ist dies der Fall, so können Rückschlüsse darauf gezogen werden, dass das Führungssystem des Transportsystems 10, also insbesondere Führungsschienen 15, 17 und Führungsrollen 21, 23, möglicherweise fehlerbehaftet ist bzw. Mängel aufweist.

Eine Fig. 1 und 2 nicht dargestellte Auswerteeinheit erfasst diese Parameter, gegebenenfalls zusätzlich einen Strombedarf der Linearmotoren 11 zum Bewegen des Transportelements 19, und wertet diese gegen vorbestimmte Toleranzen aus. Sofern die Abweichung des Transportelements 19 von der idealen Führungsbahn 13 die entsprechenden Toleranzen überschreitet, wird das Vorliegen eines Mangels festgestellt. Gleichermaßen stellt die Auswerteeinheit einen Mangel fest, wenn eine Orientierung oder Lage des Transportelements 19 an einer Position entlang der Führungsbahn die entsprechenden Toleranzen überschreitet. Der Strombedarf der Linearmotoren 11 gilt als zusätzlicher Indikator für das Vorliegen eines Mangels, da sich beispielsweise bei einer erhöhten auf das Transportelement 19 wirkenden Widerstand, der durch Mängel des Führungssystems bedingt sein kann, ein höherer Strombedarf ergibt.

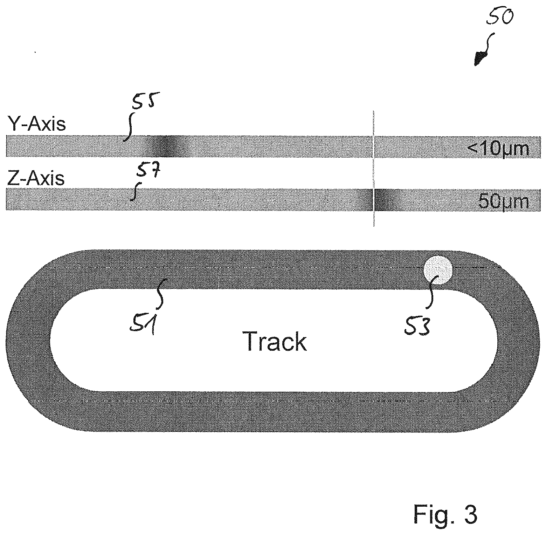

Fig. 3 zeigt ein Beispiel dafür, wie die von dem 3D-Erfassungssystem erfasste Position und Abweichung visualisiert werden können. Eine solche Visualisierung 50 bietet sich beispielsweise für eine softwareunterstützte Auswertung der Ergebnisse an, beispielsweise als Applikation installiert auf einem Computer oder einer mobilen Vorrichtung wie einem Tablet, die in diesem Fall auch als Auswerteeinheit angesehen werden können.

Die Visualisierung 50 zeigt eine schematische Darstellung einer Führungsbahn 51. Im vorliegenden Beispiel ist das visualisierte Transportsystem umlaufend aufgebaut. Entlang der Führungsbahn 51 ist die Position 53 eines Transportelements, die von einem 3D-Erfassungssystem erfasst worden ist, im vorliegenden Beispiel als Punkt dargestellt. Die Visualisierung 50 zeigt ferner eine Querabweichung 55 und eine Vertikalabweichung 57 des jeweiligen Transportelements an der Position 53. Anders ausgedrückt weist das Transportelement an der durch den Punkt angezeigten Position 53 eine Querabweichung 55 zu einer ideal angenommenen Führungsbahn kleiner als 10 µm, die innerhalb der Toleranz ist, aber eine Vertikalabweichung 57 zu der ideal angenommenen Führungsbahn von 50 µm, die die entsprechende Toleranz überschreitet, auf. Somit kann darauf geschlossen werden, dass das Führungssystem an der korrespondierenden Stelle des Transportsystems einen Mangel aufweist. Beispielsweise können die Führungsschienen über die Toleranzen hinaus vertikal zu ihrer optimalen Position versetzt sein.

Auf Basis der gewonnenen Erkenntnisse können Mängel, das heißt Fehler aber auch Ungenauigkeiten, an dem Führungssystem schnell und zielführend erkannt, verortet, ausgewertet und ausgebessert werden. Somit können die Leistung und Zuverlässigkeit des Transportsystems erhöht werden. Zudem können Verwender bzw. Kunden von Transportsystemen ein eigenes Führungssystem entwickeln und verwenden, dabei gezielt Mängel des eigenen Führungssystems abstellen und somit von einer hohen Flexibilität in der Gestaltung des Transportsystems profitieren.

### Bezugszeichenliste

- 10: Transportsystem
- 11: Linearmotor
- 13: Führungsbahn
- 15: erste Führungsschiene
- 17: zweite Führungsschiene
- 19: Transportelement
- 21: erste Führungsrollen
- 23: zweite Führungsrollen
- 25: Antriebsmagnet
- 27: Elektromagnet
- 29: Positionsmagnet
- 31: 3D-Hall-Sensor
- 50: Visualisierung
- 51: Führungsbahn
- 53: Position eines Transportelements
- 55: Querabweichung
- 57: Vertikalabweichung

- x: Längsachse
- y: Querachse
- z: Vertikalachse
- B: Bewegungsrichtung

## Patentansprüche

1. Transportsystem (10), insbesondere Multi-Carrier-System, umfassend mehrere Linearmotoren (11), welche aneinandergereiht angeordnet sind und eine Führungsbahn (13) aufweisen,
zumindest ein Transportelement (19), das mittels der Linearmotoren (11) entlang der Führungsbahn (13) bewegbar ist, und
ein Positionserfassungssystem zum Erfassen einer Position des Transportelements (19) entlang der Führungsbahn (13) und einer Abweichung des Transportelements (19) von der Führungsbahn (13).

2. Transportsystem (10) nach Anspruch 1,
**dadurch gekennzeichnet, dass** das Positionserfassungssystem als 3D-Erfassungssystem zum Erfassen einer Position des Transportelements (19) relativ zu der Führungsbahn (13) und einer Orientierung des Transportelements (19) relativ zu der Führungsbahn (13) ausgebildet ist.

3. Transportsystem (10) nach Anspruch 2,
**dadurch gekennzeichnet, dass** das 3D-Erfassungssystem ausgebildet ist, einen Lagewinkel des Transportelements (19) um eine Längsachse (x), einen Lagewinkel des Transportelements (19) um eine Querachse (y) und einen Lagewinkel des Transportelements (19) um eine Vertikalachse (z) zu detektieren, um die Orientierung des Transportelements (19) relativ zu der Führungsbahn (13) zu erfassen.

4. Transportsystem (10) nach einem der vorstehenden Ansprüche,
**dadurch gekennzeichnet, dass** das Transportelement (19) einen Positionsmagneten (29) und das Positionserfassungssystem einen mehrdimensionalen Hall-Sensor (31) zum Erfassen eines Magnetfelds des Positionsmagneten (29) aufweist.

5. Transportsystem (10) nach Anspruch 4,
**dadurch gekennzeichnet, dass** das Positionserfassungssystem mehrere mehrdimensionale Hall-Sensoren (31) aufweist, die vorzugsweise äquidistant entlang der Führungsbahn (13) angeordnet sind.

6. Transportsystem (10) nach einem der vorstehenden Ansprüche,
**gekennzeichnet durch** eine Auswerteeinheit, die ausgebildet ist, basierend auf der Position und der Orientierung des Transportelements (19) Mängel eines Führungssystems zu erkennen.

7. Transportsystem (10) nach Anspruch 6,
**dadurch gekennzeichnet, dass** die Auswerteeinheit zum Erkennen von Mängeln des Führungssystems ferner einen Strombedarf der Linearmotoren (11) zum Bewegen des Transportelements (19) auswertet.

8. Transportsystem (10) nach Anspruch 6 oder 7,
**dadurch gekennzeichnet, dass** die Auswerteeinheit ausgebildet ist, Mängel des Führungssystems basierend auf vorbestimmten Toleranzen zu erkennen.

9. Transportsystem (10) nach einem der Ansprüche 6 bis 8,
**dadurch gekennzeichnet, dass** die Auswerteeinheit ausgebildet ist, bei Erkennen von Mängeln einen Warnindikator auszugeben und/oder eine Ursache für den jeweiligen Mangel zu bestimmen.

10. Verfahren zum Erkennen von Mängeln eines Führungssystems eines Transportsystems (10), insbesondere eines Multi-Carrier-Systems, das mehrere Linearmotoren (11), welche zum Ausbilden einer Führungsbahn (13) aneinandergereiht angeordnet sind,
zumindest ein Transportelement (19), das mittels der Linearmotoren (11) entlang der Führungsbahn (13) bewegbar ist, und
ein Positionserfassungssystem umfasst,
wobei das Verfahren die folgenden Schritte aufweist:
Bewegen des Transportelements (19) entlang der Führungsbahn (13),
Erfassen einer Position des Transportelements (19) entlang der Führungsbahn (13) und einer Abweichung des Transportelements (19) von der Führungsbahn (13) an wenigstens einer Stelle entlang der Führungsbahn (13) und
Auswerten der Position und der Abweichung des Transportelements (19) zum Erkennen von Mängeln des Führungssystems.

11. Verfahren nach Anspruch 10,
**dadurch gekennzeichnet, dass** das Positionserfassungssystem als 3D-Erfassungssystem ausgebildet ist und bei dem Erfassen der Position und der Abweichung des Transportelements (19) zusätzlich eine Orientierung des Transportelements (19) relativ zu der Führungsbahn (13) erfasst wird.

12. Verfahren nach Anspruch 10 oder 11,
**dadurch gekennzeichnet, dass** die Position und/oder die Orientierung des Transportelements (19) an mehreren Stellen entlang der Führungsbahn (13) erfasst werden, die vorzugsweise äquidistant zueinander angeordnet sind.

13. Verfahren nach einem der Ansprüche 10 bis 12,
**dadurch gekennzeichnet, dass** zum Erkennen von Mängeln des Führungssystems ferner ein Strombedarf der Linearmotoren (11) zum Bewegen des Transportelements (19) ausgewertet wird.

14. Verfahren nach einem der Ansprüche 10 bis 13,
**dadurch gekennzeichnet, dass** das Auswerten der Position des Transportelements (19), der Orientierung des Transportelements (19) und/oder des Strombedarfs durch Abgleich gegen vorbestimmte Toleranzen erfolgt.

15. Verfahren nach einem der Ansprüche 10 bis 14,
**gekennzeichnet durch** das Ausgeben eines Warnindikators bei Erkennen eines Mangels der Führungsbahn (13) und/oder durch das Bestimmen einer Ursache für den jeweiligen Mangel.
